# EUROPÄISCHE PATENTSCHRIFT

(11) **EP 2 818 288 B1**
(45) Veröffentlichungstag und Bekanntmachung des Hinweises auf die Patenterteilung: **15.05.2019**
(21) Anmeldenummer: 14173806.2
(22) Anmeldetag: 25.06.2014
(51) Int. Cl.: B28D 1/04, B28D 1/14, B28D 1/18

(54) **Werkzeugkrone, Verfahren zur Herstellung eines Glas- oder Glaskeramikelements und Spiegelträger aus Glas- oder Glaskeramik für ein Teleskop**
Tool crown, process for manufacturing a glass or glass ceramic element and glass or glass ceramic mirror support for a telescope
Tête porte-outil, procédé de fabrication d'un élément en verre ou en vitrocéramique et support de mirroir en verre ou en vitrocéramique pour télescope

(30) Priorität: 25.06.2013 DE 102013106612
(43) Veröffentlichungstag der Anmeldung: 31.12.2014
(73) Patentinhaber: Schott AG, 55122 Mainz (DE)
(72) Erfinder: Mischke, Stefan, 55234 Albig (DE); Werner, Thomas, 55411 Bingen (DE); Weisenburger, Marco, 55278 Undenheim (DE)
(74) Vertreter: Blumbach · Zinngrebe Patent- und Rechtsanwälte

(56) Entgegenhaltungen:
- EP-A1- 0 350 526
- EP-A2- 0 630 864
- WO-A1-92/12837
- DE-A1-102006 006 445
- DE-U1- 29 519 102
- JP-A- 2003 020 238
- JP-A- 2005 199 619
- US-A- 5 252 009
- US-A1- 2009 197 040
- US-A1- 2010 182 711

## Beschreibung

Die Erfindung betrifft allgemein rotierende Abtragswerkzeuge. Im Speziellen betrifft die Erfindung eine Werkzeugkrone zum Bohren und Fräsen von Vertiefungen in Glas oder Glaskeramik, ein Verfahren zur Herstellung eines Glas- oder Glaskeramikelements mittels einer solchen Werkzeugkrone und einen Spiegelträger aus Glas- oder Glaskeramik für ein Teleskop.

Dokument WO 92/12837 A1 offenbart eine Werkzeugkrone zum Bohren und Fräsen von Vertiefungen in Glas oder Glaskeramik, wobei die Werkzeugkrone einen hohlzylinderförmigen Schleifkörper aufweist, der in einen vorzugsweise hohlen Schaft übergeht, wobei an der Stirnfläche des hohlzylinderförmigen Schleifkörpers eine Schleiffläche angeordnet ist, welche mittels zumindest eines Stegs mit der Innenwandung des hohlzylinderförmigen Schleifkörpers verbunden ist, und wobei die Stirnfläche des Schleifkörpers, der Steg zumindest ein Teil der Außenwandung des Schleifkörpers mit Schleifmittel belegt ist, und wobei zwischen dem zumindest einen Steg und der Innenwandung des Schleifkörpers zumindest eine Öffnung zum Inneren des Schleifkörpers verbleibt.

US 2010/182711 A1 offenbart einen Spiegelträger aus Glas- oder Glaskeramik für ein Teleskop, wobei das Glas oder Glaskeramikelement mehrere eingeschliffene Vertiefungen, die nebeneinander verlaufen, als einseitig geschlossene Höhlungen mit einer Öffnung an der Oberfläche des Glas- oder Glaskeramikelements, aufweist und die Vertiefungen von einer seitlichen Wandung begrenzt werden, die eine Krümmung mit einem minimalen Radius von mindestens 6 Millimetern aufweist, wobei das Verhältnis von Tiefe der Vertiefung zu minimalem Radius weniger als etwa 6,25 beträgt.

Aus der DE 35 34 426 C1 ist eine Bohrvorrichtung zum Bohren von bruchempfindlichen Platten, wie insbesondere von Glasplatten bekannt. Die zu durchbohrende Platte wird mit einem Auflager und einem Niederhalter fixiert. Aufhalter und Niederhalter werden durch Innenringe von Kugelgelenklagern gebildet, um beim Fixieren der Glasplatte Biegespannungen zu vermeiden. Eine Bohrung wird mit zwei gegenläufig aufeinander zu bewegbaren Hohlbohrern erzeugt. Die EP 2 489 488 A1 beschreibt weiterhin eine Diamantlochsäge mit Zentrierbohrer und Anschlag.

Die Diamantlochsäge umfasst ein kronen- oder becherartiges Fräswerkzeug, dessen in einer Arbeitsebene verlaufender Rand mit spanabhebenden Mitteln versehen ist. In der Drehachse des Fräswerkzeuges ist ein Bohrer angeordnet, dessen Spitze zum Bohren einer Zentrierbohrung die Arbeitsebene überragt und dessen Schaft mit einem Halter verbunden ist. Dem Schaft des Bohrers ist ein Anschlag zugeordnet, der vom Rand um eine Strecke überragt wird und der nach dem Fräsen eines Pilotkreises mit den spanabhebenden Mitteln des Randes gegen das Werkstück anschlägt, um ein Vertiefen des Pilotkreises erst nach Trennen des Bohrers vom Halter zu ermöglichen.

Beide vorstehend genannte Vorrichtungen sind geeignet, Durchgangsöffnungen geringer Tiefe in Glasplatten einzufügen.

Aus der EP 06417 A1 ist ein hartmetallbestückter Bohrer bekannt, der zum Bohren sehr unterschiedlicher Materialien, wie Metalle, Glas, Keramik und Beton geeignet sein soll. Der Bohrer weist eine Hartmetallschneide mit einem Spitzenwinkel von 120° - 125° und einem Freiwinkel von 10° - 15° auf. Bei einem Bohrer dieses Typs, der auf einer zerspanenden Arbeitsweise beruht, besteht bei sprödharten Materialien wie Glas oder Glaskeramik allerdings die Gefahr einer Rissbildung. Selbst wenn keine makroskopischen Risse im Werkstück hinterlassen werden, können Mikrorisse eingefügt werden, die auf das Material stark festigkeitsmindernd wirken. Zudem ist der Bohrer nur für das Einfügen von Bohrungen, nicht aber zum Fräsen geeignet.

Die US 3 343 308 A beschreibt eine Schneid- und Schleifvorrichtung für das Bauwesen, bei welcher beabstandete Schleifkörper auf einem Werkzeug und untereinander mit einem duktilen Draht befestigt sind. Gemäß einer Ausführungsform ist ein nicht kernbohrender Bohrer vorgesehen, bei welchem ein oder mehrere Schleifkörper über die Öffnung eines Kernbohrers gespannt sind.

Aus der US 5 137 098 A ist weiterhin ein Diamantwerkzeug zum Bohren und Fräsen bekannt. Gemäß einer Ausführungsform ist ein axial hervorstehender, sich um die Drehachse herum erstreckender halbkreisförmiger, mit Schleifmittel belegter Vorsprung vorgesehen. Es können auch mehrere solcher Vorsprünge vorgesehen sein.

Schließlich ist aus dem Dokument JP 2003/020238 ein Verfahren zur Erzeugung einer Glasfaser-Vorform bekannt. Hierbei wird in einem Block aus erstem Quarzglas eine Durchgangsbohrung erzeugt, die durchgehend mit zweitem Quarzglas gefüllt wird. Die Quarzgläser werden miteinander verschmolzen.

US 2009/0197040 betrifft das Pressbohren von erhitzten Glassubstraten mittels beidseitiger Pressstempel.

Sacklöcher, deren Durchmesser und Tiefe mit Werkzeugen geschliffen werden müssen, dessen Verhältnis Durchmesser des Werkzeugschafts zu Werkzeuglänge kleiner als 1:10 ist, können damit bisher aufgrund der instabilen Werkzeugschäfte nicht mehr in Glaskeramik mit noch akzeptabler Minderung der Materialfestigkeit gefertigt werden. Dabei ist der Durchmesser des Werkzeugschaftes maßgeblich abhängig vom Durchmesser der Werkzeugkrone.

Der Erfindung liegt mithin die Aufgabe zugrunde, ein Werkzeug zur Verfügung zu stellen, mit welchem auch tiefe Bohrungen und Ausfräsungen in sprödharten Materialien, insbesondere Glas und Glaskeramik ohne Gefahr eines Bruchs eingefügt werden können. Diese Aufgabe wird durch den Gegenstand des Anspruchs 1 gelöst. Die Erfindung betrifft auch ein Verfahren zur Herstellung eines Glas- oder Glaskeramikelements gemäß Anspruch 9 und einen Spiegelträger aus Glas- oder Glaskeramik für ein Teleskop gemäß Anspruch 10.

### Vorteilhafte

Ausgestaltungen und Weiterbildungen der Erfindung sind in den abhängigen Ansprüchen angegeben.

Demgemäß sieht die Erfindung eine Werkzeugkrone zum Bohren und Fräsen von Vertiefungen in sprödharten Materialien vor, wobei die Werkzeugkrone einen hohlzylinderförmigen Schleifkörper aufweist, der in einen vorzugsweise hohlen Schaft übergeht, wobei an der Stirnfläche des hohlzylinderförmigen Schleifkörpers am Ort der Zylinderachse des Schleifkörpers eine zentrale Schleiffläche angeordnet ist, welches mittels zumindest eines Stegs mit der Innenwandung des hohlzylinderförmigen Schleifkörpers verbunden ist.

Die Stirnfläche des Schleifkörpers, der Steg mit der zentralen Schleiffläche und zumindest ein Teil der Außenwandung des Schleifkörpers sind mit Schleifmittel belegt. Zwischen dem zumindest einen Steg und der Innenwandung des Schleifkörpers verbleibt zumindest eine Öffnung zum Inneren des hohlzylinderförmigen Schleifkörpers, vorzugsweise auch zum Inneren des Schafts. Der Steg kann auch als Speiche bezeichnet werden.

Der Materialabtrag mit der Werkzeugkrone erfolgt demgemäß durch Schleifen, was als Schneiden oder Abrieb mit geometrisch unbestimmter Schneide (aufgrund der Anordnung und Form der Schleifkörner) bezeichnet werden kann.

Mit dieser Konstruktion kann der Durchmesser der Werkzeugkrone gegenüber der Querschnittfläche der einzufügenden Vertiefung maximiert werden. Beim Ausfräsen der Vertiefung muss die seitliche Bewegung der um ihre Zylinderachse rotierenden Werkzeugkrone nicht mehr bis über dessen Mittenachse hinaus erfolgen, um das Material im Querschnitt der Vertiefung vollständig abzutragen. Vielmehr sorgen der Steg und die zentrale Schleiffläche dafür, dass auch bei einer nur geringfügigen seitlichen Bewegung der Werkzeugkrone die gesamte vom Umfang der Werkzeugkrone überstrichenen Fläche Material abgeschliffen wird.

Obwohl die Umfangsgeschwindigkeit der Schleiffläche in der Werkzeugmitte, beziehungsweise an der Zylinderachse gleich null ist, kann die Werkzeugkrone überraschend sogar sehr gut zum Bohren von Vertiefungen, also ohne seitliche Bewegung der Werkzeugkrone verwendet werden. Hier führt die erfindungsgemäße Ausgestaltung der Werkzeugkrone auch dazu, dass die Krone weniger schlägt und vibriert, so dass sehr glatte Wandungen erzeugt werden.

Der Querschnitt einer mit dem Werkzeug herstellbaren Vertiefung weist aufgrund der rotierenden zylindrischen Grundform einen minimalen Radius auf, der aufgrund des endlichen Durchmessers des Schleifkörpers nicht unterschritten werden kann.

Unabhängig davon, ob eine Vertiefung gebohrt oder ausgefräst wird, können im Verhältnis zum minimalen Radius der Seitenwandung und damit indirekt auch zur Querschnittabmessung nun sehr tiefe Vertiefungen in sprödharten Materialien, wie insbesondere Glas und Glaskeramik eingefügt werden. Demgemäß betrifft die Erfindung auch einen Spiegelträger aus Glas- oder Glaskeramik für ein Teleskop gemäß Anspruch 10, welches durch Bearbeitung mittels einer erfindungsgemäßen Werkzeugkrone herstellbar ist.

Im Spezialfall einer Vertiefung mit kreisförmigem Querschnitt ist die Tiefe der Vertiefung mindestens zehnmal so groß, wie deren Durchmesser.

Mit der Erfindung können beispielsweise Leichtgewichtsstrukturen aus Glaskeramik gefertigt werden. Die besonders gute Laufruhe der erfindungsgemäßen Werkzeugkrone ermöglicht dabei auch sehr dünnwandige Strukturen. Erfindungsgemäß ist der minimale Abstand der Wandung der Vertiefung zu einer Oberfläche des Glas- oder Glaskeramikelements höchstens 15 Millimeter, bevorzugt höchstens 10 Millimeter betragen. Die Oberfläche kann dabei auch die Wandung einer benachbarten Vertiefung sein. Erfindungsgemäß ist daher ein Glas- oder Glaskeramikelement vorgesehen, welches mehrere nebeneinander verlaufende eingeschliffene Vertiefungen aufweist, wobei der minimale Abstand zwischen den Wandungen zweier benachbarter Vertiefungen höchstens 15 Millimeter, bevorzugt höchstens 10 Millimeter beträgt.

Eine mögliche Anwendung sind beispielsweise glaskeramische, gewichtsreduzierte Spiegelträger für Teleskope.

Die Erfindung wird nachfolgend genauer und anhand von Ausführungsbeispielen und den beigeschlossenen Zeichnungen erläutert. In den Zeichnungen bezeichnen gleiche Bezugszeichen gleiche oder entsprechende Elemente. Es zeigen:
Fig. 1 eine schematische Ansicht einer Werkzeugkrone,
Fig. 2 bis Fig. 4 Aufsichten auf die Stirnfläche der Werkzeugkrone,
Fig. 5 und Fig. 6 Aufsichten auf eine Vertiefung während des Ausarbeitens der Vertiefung mit einer Werkzeugkrone,
Fig. 7 ein Glas- oder Glaskeramikelement in Querschnittansicht,
Fig. 8 eine Querschnittsform einer Vertiefung, und
Fig. 9 eine fotografische Aufnahme eines Glaskeramikblocks mit einer Vertiefung.

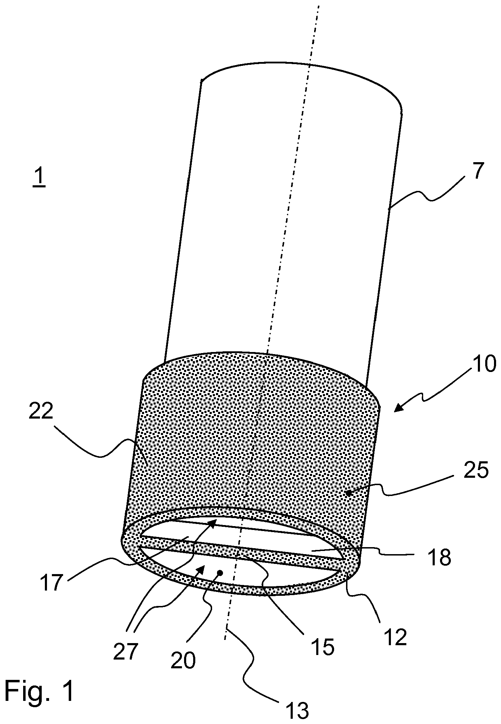

Fig. 1 zeigt ein Ausführungsbeispiel einer erfindungsgemäßen Werkzeugkrone 1 in perspektivischer Ansicht.

Die Werkzeugkrone 1 umfasst einen Schleifkörper 10, welcher die Grundform eines Hohlzylinders hat. Der Schleifkörper 10 geht in einen Schaft 7 über. Dabei kann der Schleifkörper 10 am Schaft befestigt sein, oder Schaft und Schleifkörper 10 sind einstückig ausgebildet, beispielsweise aus einem Rohr geeigneten Durchmessers gedreht. Der Schaft 7 ist ebenfalls hohlzylinderförmig. Ohne Beschränkung auf das spezielle, in Fig. 1 gezeigte Ausführungsbeispiel weist der Schaft 7 bevorzugt einen kleineren Durchmesser als der Schleifkörper 10 auf, um das Ausfräsen und/oder Bohren von Vertiefungen zu vereinfachen, deren Tiefe größer als die axiale Länge des Schleifkörpers 10 ist. Allgemein, ohne Beschränkung auf das spezielle in Fig. 1 gezeigte Beispiel ist der Schleifkörper 10 gemäß einer Ausführungsform einstückig, insbesondere als Formkörper ausgebildet. Dazu kann der Schleifkörper 10 inklusive des oder der Stege beispielsweise aus einem Metallkörper ausgefräst oder in einem Gussverfahren hergestellt sein. Weiterhin können die Stege auch in einen hohlzylindrischen Grundkörper des Schleifkörpers eingeschweißt sein.

Mit dem Schaft wird die Werkzeugkrone in das Futter einer Bohr- und/oder Fräsvorrichtung eingespannt. Das Einbringen von Vertiefungen erfolgt dann durch Rotation der Werkzeugkrone 1 um dessen Zylinderachse 13 und axialem und/oder radialem Vorschub der Werkzeugkrone 1.

Der Schleifkörper 10 ist mit einem Schleifmittel 25 belegt, welches für den Materialabtrag beim Einbringen einer Vertiefung in einem sprödharten Material sorgt. Die mit Schleifmittel 25 versehenen Oberflächen des Schleifkörpers sind mit einer Punktschraffur gekennzeichnet.

Wie anhand von Fig. 1 ersichtlich, ist auch in der Werkzeugmitte, beziehungsweise am Ort der Zylinderachse 13 Schleifmittel 25 vorhanden. Dazu sind zwei bei dieser Ausführungsform gegenüberliegend von der Innenwandung 20 des Schleifkörpers 10 ausgehende und mit Schleifmittel 25 belegte Stege 17, 18 vorhanden, welche sich am Ort der Zylinderachse 13 treffen. Damit wird am und um den Bereich der Zylinderachse 13 an der Stirnfläche 12 des Schleifkörpers eine zentrale Schleiffläche 15 gebildet. Die spezielle Struktur des dargestellten Beispiels kann auch als einzelner, durch die Werkzeugmitte, beziehungsweise den Ort des Durchstoßpunktes der gedachten Zylinderachse durch die Ebene der Stirnfläche 12 laufender Steg 17 aufgefasst werden. Demgemäß ist am Ort der Zylinderachse 13 des Schleifkörpers 10 eine zentrale Schleiffläche 15 angeordnet, welche mittels zumindest eines Stegs 17, 18 mit der Innenwandung 20 des hohlzylinderförmigen Schleifkörpers 10 verbunden ist. Dabei sind die Stirnfläche 12 des Schleifkörpers 10, der, beziehungsweise die Stege 17, 18 mit der zentralen Schleiffläche 15 und zumindest ein Teil der Außenwandung 22 des Schleifkörpers 10 mit Schleifmittel 25 belegt.

Erfindungsgemäß ist der zumindest eine Steg entlang dessen radialer Richtung auch durchgehend mit Schleifmittel 25, insbesondere mit Schleifkörnern belegt. Vorzugsweise werden also nicht etwa einzelne, radial beabstandete Schleifwerkzeuge oder Schleifelemente auf dem oder den Stegen vorgesehen. Eine kontinuierliche Belegung mit dem Schleifmittel auf dem oder den Stegen 17, 18, wie sie Fig. 1 zeigt und wie sie auch allgemein bevorzugt wird, sorgt erstens für eine hohe Abtragsleistung und zweitens gleichzeitig auch für eine hohe Laufruhe der Werkzeugkrone. Besonders bevorzugt sind auch die zentrale Schleiffläche und die Stirnfläche des hohlzylindrischen Grundkörpers, mithin also die gesamte Stirnfläche durchgehend mit Schleifmittel belegt.

Die durch die Geometrie der Werkzeugkrone 1 erhaltene Laufruhe ermöglicht es, sehr lange Werkzeuge einzusetzen. Gemäß einer Ausführungsform der Erfindung ist daher vorgesehen, dass der Durchmesser des Schafts 7 höchstens 1:10, vorzugsweise höchstens 1:15 der Länge der Werkzeugkrone gemessen von der Stirnfläche 12 des Schleifkörpers 10 bis zum Ende des Schafts 7 beträgt. Die vorgenannte Länge der Werkzeugkrone 1 beträgt gemäß noch einer Ausführungsform der Erfindung mehr als 60 mm, vorzugsweise mehr als 120 mm. Gegebenenfalls kann dabei auch ein mehrteiliger Schaft 7 mit aneinandergefügten axialen Schaftabschnitten vorgesehen sein, um eine lange Werkzeugkrone 1 zum Bohren oder Fräsen tiefer Vertiefungen zu erhalten.

Das Schleifmittel 25 auf der Außenwandung 22 ermöglicht einen Materialabtrag bei einem radialen Vorschub, das Schleifmittel 25 auf der Stirnfläche und den Stegen 17, 18, die auch die zentrale Schleiffläche 15 bilden, einen Materialabtrag bei axialem Vorschub der Werkzeugkrone.

Allgemein, ohne Beschränkung auf das dargestellte Ausführungsbeispiel verbleibt zwischen den Stegen 17, 18 und der Innenwandung 20 des Schleifkörpers 10 zumindest eine Öffnung 27 zum Inneren des Schleifkörpers 10 und des hohlen Schafts 7. Bei dem in Fig. 1 gezeigten Ausführungsbeispiel ergeben sich durch die miteinander verbundenen Stege 17, 18 oder den durchgehenden Steg hier zwei Öffnungen 27.

Durch die zumindest eine Öffnung ist also keine geschlossene Stirnfläche vorhanden. Die Öffnung 27 dient insbesondere dazu, abgetragenes Material aufzunehmen und gegebenenfalls Kühl- und/oder Schmiermittel zuzuführen.

Bevorzugt sind ohne Beschränkung auf die spezielle Ausgestaltung der Fig. 1 die Stirnfläche 12 des Hohlzylinders des Schleifkörpers und die weiteren schleifenden Elemente an der Stirnseite in einer Ebene angeordnet. Damit wird unter anderem ermöglicht, Vertiefungen mit ebenem Boden herzustellen. Zudem erweist sich eine solche ebene Konfiguration günstig, um Schwingungen der Werkzeugkrone 1 zu vermeiden. Demgemäß ist in Weiterbildung der Erfindung ohne Beschränkung auf das Ausführungsbeispiel der Fig. 1 vorgesehen, dass die zentrale Schleiffläche 15 und der zumindest eine Steg 17, 18 auf gleicher Höhe wie die Stirnfläche 12 liegen, so dass die Stirnfläche 12, der zumindest eine Steg 17, 18, 19 und die zentrale Schleiffläche 15 eine in einer durch die Stirnfläche 12 definierten Ebene liegende, von der zumindest einen Öffnung 27 durchbrochene Schleiffläche bilden.

Das Schleifmittel 25 wird allgemein besonders bevorzugt durch Schleifkörner, vorzugsweise Diamantschleifkörner gebildet, welche in eine Matrix eingebettet sind. Neben Diamant ist beispielsweise aber auch Korund, Siliziumcarbid oder ein anderer Hartstoff als Schleifmittel denkbar.

Besonders bevorzugt werden außerdem in einer Metallmatrix eingesinterte Schleifkörner. Auch mit einer galvanischen Abscheidung kann eine Metallmatrix mit eingebetteten Schleifmittelkörnern erzeugt werden. Eine Metallmatrix wird aufgrund der guten Wärmeableitung in den Schleifkörper 10 hinein bevorzugt. Gegebenenfalls denkbar wäre aber auch eine Kunststoffmatrix oder eine Keramik mit enthaltenem Schleifmittel.

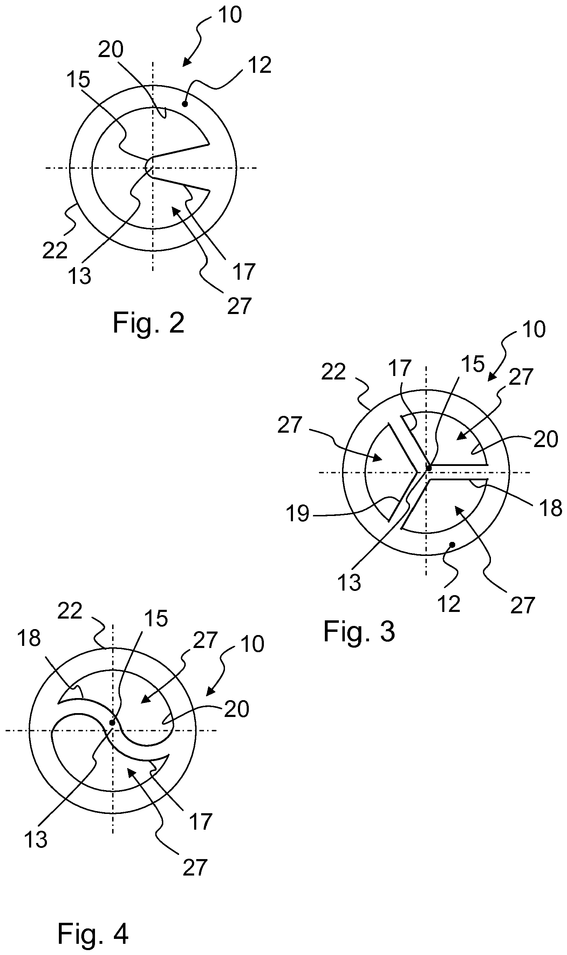

Die Fig. 2 bis Fig. 4 zeigen in Aufsicht auf die Stirnfläche des Schleifkörpers 10 verschiedene weitere Ausführungsformen der Anordnung und Ausbildung von Stegen. Bei dem in Fig. 2 gezeigten Ausführungsbeispiel ist ein einzelner Steg 17 einseitig mit der Innenwandung 20 des Schleifkörpers 10 verbunden. Das Ende des Stegs 17 bildet eine zentrale Schleiffläche 15 am Ort der Zylinderachse 13 und den Bereich der Zylinderachse 13 umgebend. Entsprechend ist nur eine einzelne Öffnung 27 vorhanden.

Die Ausführungsform der Fig. 3 wird besonders bevorzugt. Hier sind drei Stege 17, 18, 19 vorhanden, welche von der Innenwandung 20 ausgehen und sich in der Werkzeugmitte treffen. Der Bereich, an welchem die Stege 17, 18, 19 zusammentreffen, bildet die zentrale Schleiffläche 15 an der Zylinderachse 13 und die Zylinderachse 13 umgebend. Entsprechend ergeben sich bei dieser Ausführungsform drei Öffnungen 27 zwischen den Stegen 17, 18, 19 und der Innenwandung 20. Die Konstruktion mit drei Stegen 17, 18, 19 ist hinsichtlich der mechanischen Stabilität besonders bevorzugt. Es können auch mehr als drei Stege, beispielsweise vier, fünf oder sechs Stege, beziehungsweise Speichen vorgesehen werden. Andererseits steigt der Herstellungsaufwand und die Gesamtfläche der Öffnungen 27 verringert sich.

Fig. 4 zeigt eine Variante der in Fig. 1 gezeigten Konfiguration mit zwei Stegen 17, 18. Im Unterschied zu der in Fig. 1 gezeigten Ausführungsform sind bei dem in Fig. 4 gezeigten Beispiel die beiden Speichen, beziehungsweise Stege 17, 18 gebogen ausgeführt.

Für die mechanische Stabilität ist es allgemein günstig, mehrere rotationssymmetrisch zur Zylinderachse 13 des Schleifkörpers 10 angeordnete, die zentrale Schleiffläche 15 mit der Innenwandung 20 des hohlzylinderförmigen Schleifkörpers 10 verbindende Stege 17, 18, 19 vorzusehen. Dies ist bei den Ausführungsbeispielen der Fig. 1, Fig. 3 und Fig. 4 der Fall.

Allgemein bevorzugt ist die Fläche des oder der Stege 17, 18, 19 und der zentralen Schleiffläche 15 zusammengenommen geringer als die Gesamtfläche der die Schleiffläche unterbrechenden Öffnung oder Öffnungen 27. Dies erweist sich für die Laufruhe und zur Vermeidung von Schwingungen an der Werkzeugkrone 1 als vorteilhaft. Die vorgenannte Bedingung ist bei allen Ausführungsbeispielen der Fig. 1 bis Fig. 4 erfüllt.

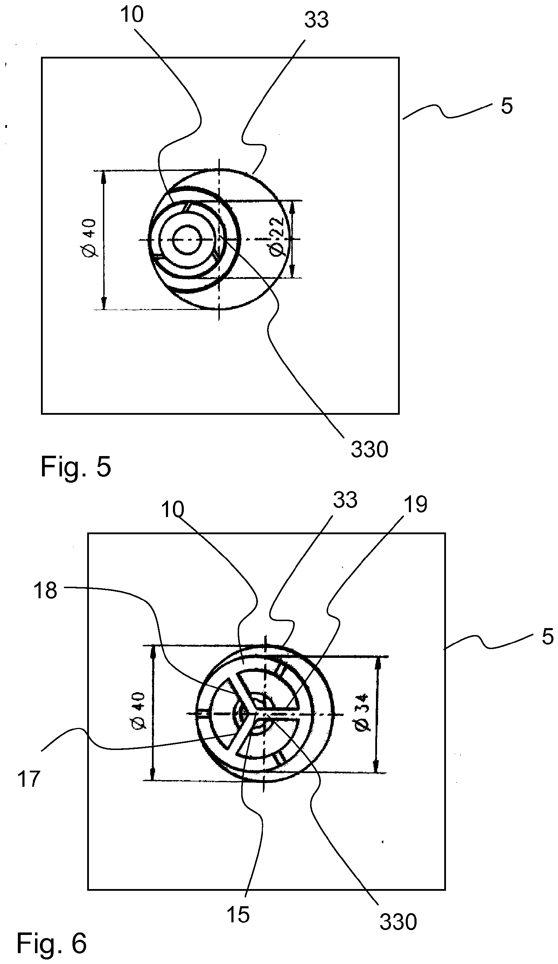

Anhand der Fig. 5 und 6 wird erläutert, weshalb mit einer erfindungsgemäßen Werkzeugkrone 1 im Verhältnis zur Querschnittfläche besonders tiefe Vertiefungen in sprödharten Materialien, wie insbesondere Glas oder Glaskeramik mit sehr glatten Wandungen eingefügt werden können.

Fig. 5 zeigt eine Aufsicht auf eine Vertiefung 33 in einem sprödharten Material 5 während des Ausarbeitens der Vertiefung mit einer Werkzeugkrone 1. Bei der in Fig. 5 gezeigten Werkzeugkrone handelt es sich dabei um ein konventionelles Werkzeug mit einer Krone in Gestalt eines Kranzes. Um wie im gezeigten Beispiel eine Vertiefung mit rundem Querschnitt mit 40 Millimetern Durchmesser einzufügen, beträgt der Durchmesser der Werkzeugkrone 1 22 Millimeter. Der Durchmesser kann nicht größer gewählt werden, da ansonsten in der Mitte 330 der Vertiefung 33 Material stehenbleibt. Dieses kann bei hinreichender Länge ausbrechen, oder stoppt den axialen Vorschub der Werkzeugkrone 1. Anhand dieses Beispiels wird ersichtlich, dass der Durchmesser der Werkzeugkrone immer deutlich kleiner sein muss, als der Durchmesser oder allgemein die Querschnittabmessung der Vertiefung. Dies führt bei großer Tiefe der Vertiefung aber schnell zu Instabilitäten des Werkzeugs, so dass keine glatten Wandungen mehr herstellbar sind.

Fig. 6 zeigt zum Vergleich eine erfindungsgemäße Werkzeugkrone 1 beim Einbringen einer Vertiefung 33 gleicher Abmessungen. Die Werkzeugkrone 1 hat beispielhaft die in Fig. 3 gezeigte Konfiguration mit drei rotationssymmetrisch angeordneten Stegen 17, 18, 19. Durch das auf den Stegen und der zentralen Schleiffläche 15 vorhandene Schleifmittel wird die Mitte 330 der Vertiefung 33 auch dann bearbeitet, wenn der äußere Kranz, beziehungsweise die Stirnfläche 12 des hohlzylinderförmigen Schleifkörpers ständig außerhalb der Mitte 330 verläuft. Es kann daher ein im Verhältnis zur Querschnittfläche der Vertiefung 33 größerer Durchmesser des Schleifkörpers 10 verwendet werden. Bei dem gezeigten Beispiel weist der Schleifkörper 10 einen Durchmesser von 34 Millimetern auf. Bei gleicher Querabmessung der Vertiefung 33 kann also im Vergleich zu einem wie in Fig. 4 gezeigten Werkzeug ein größerer Schleifkörper 10 verwendet werden, was die Laufruhe der Werkzeugkrone 1 erheblich verbessert. Je tiefer eine Vertiefung eingefügt wird, desto kritischer wird die Laufruhe.

Der minimale Durchmesser einer Vertiefung 33 hängt selbstverständlich vom Durchmesser der Werkzeugkrone 1 ab. Ohne Beschränkung auf die in den Figuren gezeigten Ausführungsbeispiele wird ein Schleifkörper 10 bevorzugt, dessen Durchmesser mindestens 5 Millimeter beträgt. Besonders geeignet sind Durchmesser des Schleifkörpers 10 zwischen 5 und 60 Millimetern.

Mit der Erfindung lassen sich auf diese Weise neuartige Glas- und Glaskeramikerzeugnisse herstellen. Das erfindungsgemäße Verfahren zur Bearbeitung eines Glas- oder Glaskeramikelements basiert darauf, dass
- ein Glas- oder Glaskeramikelement bereitgestellt und
- mittels einer erfindungsgemäßen Werkzeugkrone, welche vorzugsweise einen Radius von mindestens 6 Millimetern aufweist, eine Vertiefung eingeschliffen wird, welche sich vorzugsweise geradlinig von der Öffnung an der Oberfläche des Glas- oder Glaskeramikelements ausgehend in das Glas- oder Glaskeramikelement hinein erstreckt, indem
- die Werkzeugkrone 1 um deren Zylinderachse in Rotation versetzt und
- während der Rotation in axialer Richtung abschnittweise oder kontinuierlich in das Glas- oder Glaskeramikelement eingeführt und dabei das Material des Glas- oder Glaskeramikelements mittels des Schleifkörpers der Werkzeugkrone abgetragen wird. Das entstehende Schleifgut kann dabei durch den hohlen Schleifkörper 10 hindurch, insbesondere mit einem durch den hohlen Schaft zugeführten Kühlfluid abgeführt werden.

Besonders bevorzugt werden Elemente aus Glas- oder Glaskeramikmaterial mit niedriger Wärmeausdehnung bearbeitet. Als niedrigdehnende Glaskeramiken können insbesondere Lithium-Aluminosilikat-Glaskeramiken verwendet werden. Geeignet sind beispielsweise Glaskeramiken, welche unter dem Namen Zerodur® von der Firma Schott AG oder unter dem Namen, Clearceram® von der Firma Ohara-Inc. angeboten werden. Die Zusammensetzung bevorzugter niedrigdehnender Glaskeramikelemente enthält gemäß einer Ausführungsform der Erfindung die Komponenten Li₂O, Al₂O₃ und SiO₂ in folgenden Mengen in Gewichtsprozent (auf Oxidbasis):
Li₂O: 2 - 5,5 Gew.-%,
Al₂O 17 - 32 Gew.-%,
SiO₂: 50 - 70 Gew.-%, vorzugsweise höchstens 62 Gew.-%,
P₂O₅: 3 - 12 Gew.-%,
ZrO₂: 0 - 5 Gew.-%, vorzugsweise mindestens 1 Gew.-%,
TiO₂: 1 - 5 Gew.-%.

Ein weiteres geeignetes niedrigdehnendes Material ist Titan-dotiertes Quarzglas. Ein solches Glas wird beispielsweise unter dem Namen ULE® von der Firma Corning Incorporated angeboten.

Als Glas- oder Glaskeramikmaterial mit niedriger Wärmeausdehnung wird insbesondere ein Werkstoff verstanden, dessen mittlerer Wärmeausdehnungskoeffizient, beispielsweise angegeben für das Temperaturintervall von 0 bis 50 °C ("Coefficient of Thermal Expansion" CTE(0;50)), höchstens 0 ± 100 ppb/K, vorzugsweise höchstens 0 ± 50 ppb/K, besonders bevorzugt höchstens - 0 ± 20 ppb/K, insbesondere bevorzugt höchstens 0 ±10 ppb/K beträgt.

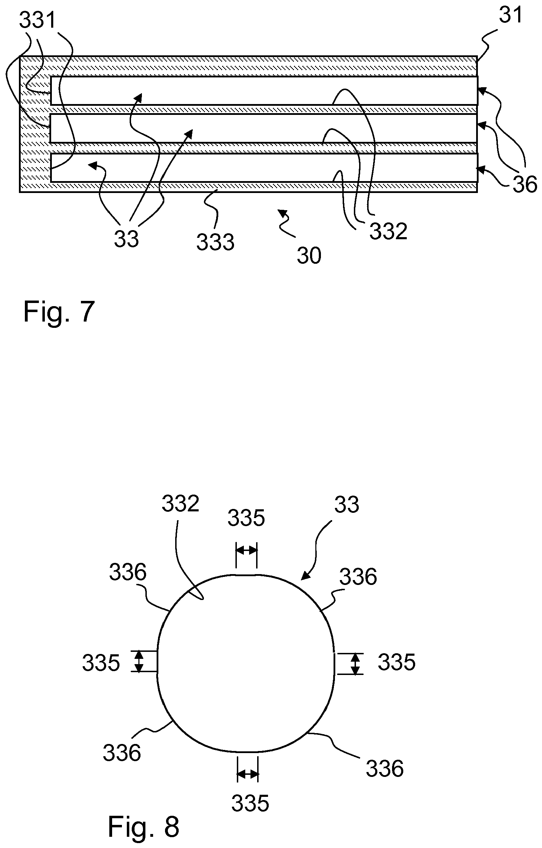

Fig. 7 zeigt einen schematischen Querschnitt durch ein solches durch Bearbeitung mittels einer erfindungsgemäßen Werkzeugkrone 1 herstellbaren Glas- oder Glaskeramikelement 30. Das Glas- oder Glaskeramikelement 30 weist zumindest eine eingeschliffene Vertiefung 33 auf. Bei dem in Fig. 7 gezeigten Beispiel sind mehrere, hier im Speziellen drei Vertiefungen 33 eingefügt, die parallel zueinander verlaufen. Die Vertiefungen 33 verlaufen außerdem geradlinig von der Öffnung 36 an der Oberfläche 31 des Glas- oder Glaskeramikelements 30 bis zum Boden 331 der jeweiligen Vertiefung 33.

Die Vertiefungen 33 weisen erfindungsgemäß ein Verhältnis von Tiefe, beziehungsweise Länge der Vertiefung 33 zu minimalem Radius von mehr als 10:1 auf. Im Falle eines kreisförmigen Querschnitts der Vertiefung 33 ergibt sich damit allgemein, ohne Beschränkung auf das dargestellte Ausführungsbeispiel ein Verhältnis der Tiefe der Vertiefung 33, also des Längenmasses gemessen von Öffnung 36 bis zum Boden 331, zu deren Durchmesser von mindestens 10:1. Bei dem in Fig. 7 gezeigten Beispiel entspricht dieses Verhältnis etwa 15:1, ablesbar anhand der Länge und Höhe der Vertiefungen 33. Gemäß einem weiteren Ausführungsbeispiel wurde in einer Glaskeramik eine Vertiefung mit einer Tiefe von 320 Millimetern bei einem Durchmesser der Werkzeugkrone von 34 Millimetern erzeugt. Damit beträgt das Verhältnis von Tiefe zu minimalem Radius der Querschnittfläche 18,8:1. Bei kreisförmigem Querschnitt ist das Verhältnis von Tiefe zu Durchmesser 9,4:1. Derartige Vertiefungen sind ohne weiteres mit der erfindungsgemäßen Werkzeugkrone 1 herstellbar.

Wie bereits oben dargelegt, zeichnet sich die Werkzeugkrone 1 auch durch eine hohe Laufruhe ab, was wiederum zu sehr glatten Wandungen führt. Ohne Beschränkung auf die Ausführungsbeispiele ist dabei in Weiterbildung der Erfindung vorgesehen, dass die mittlere Rauheit der Seitenwandung 332 der Vertiefung 33 einen Wert Rₐ < 6µm aufweist. Sind, beispielsweise beim schrittweisen Vorschub der Werkzeugkrone und Ausfräsen eines Höhenbereichs im Glas- oder Glaskeramikmaterial Stufen in der Vertiefung vorhanden, gilt der oben genannte Wert für Flächenbereiche außerhalb der Stufen. Es lassen sich sogar mittlere Rauheiten von 0,1 µm bis 5 µm erzielen. Typische Werte liegen im Bereich von 0,5 bis 3,5 µm. Vorzugsweise beträgt die Rauheit also höchstens 5 µm, besonders bevorzugt höchstens 3,5 µm.

Die glattesten Wandungen können dabei durch das Bohren von Vertiefungen 33 hergestellt werden. Beim Bohren wird anders als beim Ausfräsen die Werkzeugkrone 1 nur mit axialem Vorschub in das Glas- oder Glaskeramikmaterial eingeführt. Generell ist es dabei überraschend, dass die zentrale Schleiffläche 15 ein Bohren überhaupt in befriedigender Zeit ermöglicht, denn die Umfangsgeschwindigkeit des Schleifmittels 25 am Ort der Zylinderachse ist gleich null.

Wie anhand des Beispiels der Fig. 7 weiterhin schematisch gezeigt, können auch sehr dünnwandige Strukturen in Glas oder Glaskeramik hergestellt werden, da aufgrund der Laufruhe der Werkzeugkrone 1 Beschädigungen, insbesondere Risse an der Wandung 332 beim Einfügen der Vertiefung 33 vermieden werden. Auch vermeidet dies ein Verlaufen der Werkzeugkrone 1. So kann der minimale Abstand der Wandung 332 einer Vertiefung 33 zu einer Oberfläche des Glas- oder Glaskeramikelements 30 höchstens 15 Millimeter, bevorzugt höchstens 10 Millimeter betragen. Dieser Abstand kann beispielsweise der Abstand zu einer Außenfläche des Glas- oder Glaskeramikelements 30 sein, also beispielsweise der Abstand der Wandung 332 der in Fig. 7 am weitesten unten dargestellten Vertiefung 33 zur Seitenfläche 333 des Glas- oder Glaskeramikelements 30.

Dünne Wände können auch, wie ebenfalls beispielhaft und schematisch in Fig. 7 gezeigt, zwischen zwei benachbarten Vertiefungen 33 hergestellt werden. Erfindungsgemäß ist vorgesehen, dass mehrere, nebeneinander verlaufende eingeschliffene Vertiefungen 33 vorhanden sind, wobei der minimale Abstand zwischen den Wandungen 332 zweier benachbarter Vertiefungen höchstens 15 Millimeter, bevorzugt höchstens 10 Millimeter beträgt. In einem praktischen Ausführungsbeispiel konnte bei einer Tiefe der Vertiefungen 33 von 320 Millimetern eine Wandstärke von nur 5 Millimetern in einem Zerodur-Glaskeramikblock verifiziert werden.

Bedingt durch die bevorzugte Ausbildung der Stirnseite der Werkzeugkrone 1, bei welcher die zentrale Schleiffläche 15, die Stirnfläche des hohlzylindrischen Teils des Schleifkörpers und die Schleifflächen an dem oder den Stegen auf einer Ebene weist die Vertiefung 33 vorzugsweise, wie auch bei dem dargestellten Beispiel, eine ebene Bodenfläche 331 auf.

Fig. 8 zeigt als Ausführungsbeispiel eine typische Querschnittform einer Vertiefung 33. Der Querschnitt hat die Form eines Quadrats oder Rechtecks mit abgerundeten Ecken.

Die Wandung 332 der Vertiefung 33 weist kurze gerade verlaufende Wandabschnitte 335 auf, welche durch kreisförmig gebogene Wandabschnitte 336 miteinander verbunden sind. In einem praktischen Ausführungsbeispiel wurde eine Vertiefung 33 mit einem Radius der gebogenen Wandabschnitte 336 von 19 Millimetern und geraden Wandabschnitten einer Breite von 5 Millimetern erzeugt. Diese Querschnittform entspricht der in Fig. 8 Form. Bei einer Tiefe der Vertiefung 33 von 320 Millimetern ergibt sich ein Verhältnis von Tiefe zu minimalem Radius von 320/19 = 16,8.

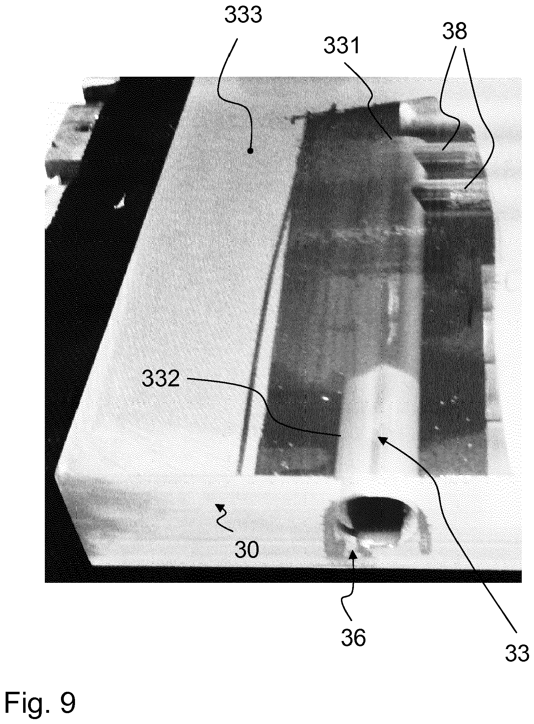

Fig. 9 zeigt eine fotografische Aufnahme eines Glas- oder Glaskeramikelements 30. Im Speziellen handelt es sich hier um einen Block aus Zerodur-Glaskeramik. In diesen Block ist eine Vertiefung 33 eingefügt. Um die Vertiefung 33 im Glaskeramikblock sichtbar zu machen, ist die Seitenfläche 333 im Bereich der Vertiefung 33 mit Öl bestrichen.

Der mit Öl versehene Bereich der Oberfläche ist nun klar durchscheinend. Die Vertiefung 33 weist eine Querschnittform entsprechend dem in Fig. 8 gezeigten Ausführungsbeispiel auf. Am Ende der Vertiefung 33 in der Nähe der Bodenfläche 331 sind zwei Seitenkanäle 38 eingefügt. Auch diese Seitenkanäle 38 wurden mit der erfindungsgemäßen Werkzeugkrone eingefügt, im Speziellen nicht durch Ausfräsen, sondern durch Bohren.

Es ist demgemäß allgemein auch möglich, aber nicht Teil der Erfindung, miteinander kommunizierende Vertiefungen, welche im Inneren des Glas- oder Glaskeramikelements aufeinanderstoßen, herzustellen. Die Erfindung ist nicht auf die lediglich beispielhaften Ausführungsformen der Erfindung beschränkt, sondern kann im Rahmen des Gegenstandes der nachfolgenden Ansprüche vielfach variiert werden. Insbesondere können die Merkmale einzelner Ausführungsbeispiele auch miteinander kombiniert werden. Anwendung findet die Erfindung unter anderem, um leichte stabile Träger, insbesondere aus Glas oder Glaskeramik herzustellen. Solche Träger können in der Halbleiter-Fertigung bei der Belichtung von Halbleiter-Wafern oder als Spiegelträger für Teleskope eingesetzt werden.

**Bezugszeichenliste:**

| | |
|---|---|
| 1 | Werkzeugkrone |
| 3 | Vertiefung |
| 5 | sprödhartes Material |
| 7 | Schaft |
| 10 | hohlzylinderförmiger Schleifkörper |
| 12 | Stirnfläche |
| 13 | Zylinderachse |
| 15 | zentrale Schleiffläche |
| 17, 18, 19 | Steg |
| 20 | Innenwandung von 10 |
| 22 | Außenwandung |
| 25 | Schleifmittel |
| 27 | Öffnung |
| 30 | Glas- oder Glaskeramikelement |
| 31 | Oberfläche von 30 |
| 33 | Vertiefung |
| 36 | Öffnung von 33 |
| 38 | seitlicher Kanal |
| 331 | Bodenfläche |
| 330 | Mitte von 33 |
| 332 | Wandung von 33 |
| 333 | Seitenfläche von 30 |
| 335 | gerader Wandabschnitt von 332 |
| 336 | gebogener Wandabschnitt von 332 |

## Patentansprüche

1. Werkzeugkrone (1) zum Bohren und Fräsen von Vertiefungen (3) in Glas oder Glaskeramik, wobei die Werkzeugkrone (1) einen hohlzylinderförmigen Schleifkörper (10) aufweist, der in einen vorzugsweise hohlen Schaft (7) übergeht, wobei an der Stirnfläche (12) des hohlzylinderförmigen Schleifkörpers (10) am Ort der Zylinderachse (13) des Schleifkörpers (10) eine zentrale Schleiffläche (15) angeordnet ist, welches mittels zumindest eines Stegs (17, 18, 19) mit der Innenwandung (20) des hohlzylinderförmigen Schleifkörpers (10) verbunden ist, und wobei die Stirnfläche (12) des Schleifkörpers (10), der Steg (17, 18, 19) mit der zentralen Schleiffläche (15) und zumindest ein Teil der Außenwandung (22) des Schleifkörpers (10) mit Schleifmittel (25) belegt ist, wobei der zumindest eine Steg entlang dessen radialer Richtung durchgehend mit Schleifmittel (25) belegt ist, und wobei zwischen dem zumindest einen Steg (17, 18, 19) und der Innenwandung des Schleifkörpers (10) zumindest eine Öffnung (27) zum Inneren des Schleifkörpers (10) verbleibt.

2. Werkzeugkrone (1) gemäß dem vorstehenden Anspruch, **dadurch gekennzeichnet, dass** die zentrale Schleiffläche (15) und der zumindest eine Steg (17, 18, 19) auf gleicher Höhe wie die Stirnfläche (12) liegen, so dass die Stirnfläche (12), der zumindest eine Steg (17, 18, 19) und die zentrale Schleiffläche (15) eine in einer durch die Stirnfläche (12) definierten Ebene liegende, von der zumindest einen Öffnung (27) durchbrochene Schleiffläche bilden.

3. Werkzeugkrone (1) gemäß einem der vorstehenden Ansprüche, **dadurch gekennzeichnet, dass** das Schleifmittel (25) Schleifkörner, vorzugsweise Diamantschleifkörner umfasst, welche in eine Matrix eingebettet sind.

4. Werkzeugkrone (1) gemäß dem vorstehenden Anspruch, wobei die Schleifkörner in einer Metallmatrix eingesintert sind.

5. Werkzeugkrone (1) gemäß einem der vorstehenden Ansprüche, **dadurch gekennzeichnet, dass** der zumindest eine Steg entlang dessen radialer Richtung durchgehend mit Schleifmittel (25), insbesondere mit Schleifkörnern belegt ist.

6. Werkzeugkrone (1) gemäß einem der vorstehenden Ansprüche, **gekennzeichnet durch** mehrere rotationssymmetrisch zur Zylinderachse (13) des Schleifkörpers (10) angeordnete, die zentrale Schleiffläche (15) mit der Innenwandung (20) des hohlzylinderförmigen Schleifkörpers (10) verbindende Stege (17, 18, 19).

7. Werkzeugkrone (1) gemäß einem der vorstehenden Ansprüche, wobei der Durchmesser des Schleifkörpers (10) mindestens 5 Millimeter beträgt, vorzugsweise, wobei der Durchmesser des Schleifkörpers (10) zwischen 5 und 60 Millimetern beträgt.

8. Werkzeugkrone (1) gemäß einem der vorstehenden Ansprüche, **dadurch gekennzeichnet, dass** die Fläche des oder der Stege (17, 18, 19) und der zentralen Schleiffläche 15 zusammengenommen geringer als die Gesamtfläche der einen oder mehreren, die Schleiffläche durchbrechenden Öffnungen (27) ist.

9. Verfahren zur Herstellung eines Glas- oder Glaskeramikelements (30), bei welchem
- ein Glas- oder Glaskeramikelement bereitgestellt und
- eine Vertiefung (33) mittels einer Werkzeugkrone (1) gemäß einem der Ansprüche 1 bis 8 eingeschliffen wird, wobei die Werkzeugkrone (1) einen Radius von mindestens 6 Millimetern aufweist, und die Vertiefung (33) sich geradlinig von der Öffnung (36) an der Oberfläche (31) des Glas- oder Glaskeramikelements (30) ausgehend in das Glas- oder Glaskeramikelement (30) hinein erstreckt, indem
- die Werkzeugkrone (1) um deren Zylinderachse in Rotation versetzt und
- während der Rotation in axialer Richtung abschnittweise oder kontinuierlich in das Glas- oder Glaskeramikelement (30) eingeführt und dabei das Material des Glas- oder Glaskeramikelements (30) mittels des Schleifkörpers (10) der Werkzeugkrone (1) abgetragen wird,
- bis als Vertiefung (33) eine einseitig geschlossene Höhlung mit einer ebenen Bodenfläche (331) in dem Glas- oder Glaskeramikelement (30) gebildet ist.

10. Spiegelträger aus Glas- oder Glaskeramik für ein Teleskop, herstellbar gemäß dem Verfahren des Anspruchs 9, wobei das Glas- oder Glaskeramikelement (30) zumindest mehrere eingeschliffene Vertiefungen (33), die nebeneinander verlaufen, als einseitig geschlossene Höhlungen mit einer Öffnung (36) an der Oberfläche (31) des Glas- oder Glaskeramikelements (30) und mit einer ebenen Bodenfläche (331) aufweist, und die Vertiefungen (33) geradlinig von der Öffnung (36) bis zu der Bodenfläche (331) verlaufen, und die Vertiefungen (33) von einer seitlichen Wandung (332) begrenzt werden, die eine Krümmung mit einem minimalen Radius von mindestens 6 Millimetern aufweist, wobei das Verhältnis von Tiefe der Vertiefungen (33) zu minimalem Radius mehr als 10:1 beträgt, und wobei der minimale Abstand zwischen den Wandungen (332) zweier benachbarter Vertiefungen (33) höchstens 15 Millimeter, bevorzugt höchstens 10 Millimeter beträgt.

11. Spiegelträger gemäß Anspruch 10, wobei die seitlichen Wandungen (332) der Vertiefungen (33) eine mittlere Rauheit von Rₐ < 6µm aufweisen.

12. Spiegelträger gemäß Anspruch 10 oder 11, **gekennzeichnet durch** eine entlang der Längsrichtung der Vertiefungen (33) gleichbleibende Querschnittfläche.

## Claims

1. A tool crown (1) for drilling and milling recesses (3) into glass or glass ceramics, the tool crown (1) comprising a hollow cylindrical abrasive body (10) which merges into a preferably hollow shank (7), wherein a central abrasive area (15) is provided at an end face (12) of the hollow cylindrical abrasive body (10) at the location of a cylinder axis (13) of the abrasive body (10), which central abrasive area is connected to the inner wall (20) of the hollow cylindrical abrasive body (10) by at least one web (17, 18, 19), and wherein the end face (12) of the abrasive body (10), the web (17, 18, 19) with the central abrasive area (15), and at least a portion of the wall outer surface (22) of the abrasive body (10) are covered with abrasive (25), wherein the at least one web is continuously covered with abrasive (25) throughout its radial extension, and wherein there is at least one opening (27) to the interior of the abrasive body (10) remaining between the at least one web (17, 18, 19) and the inner wall of the abrasive body (10).

2. The tool crown (1) according to the preceding claim, **characterised in that** the central abrasive area (15) and the at least one web (17, 18, 19) are at the same level as the end face (12) so that the end face (12), the at least one web (17, 18, 19) and the central abrasive area (15) form an abrasive surface in a plane defined by the end face (12) and interrupted by the at least one opening (27).

3. The tool crown (1) according to any one of the preceding claims, **characterised in that** the abrasive (25) comprises abrasive grits, preferably diamond abrasive grits, which are embedded in a matrix.

4. The tool crown (1) according to the preceding claim, wherein the abrasive grits are sintered into a metal matrix.

5. The tool crown (1) according to any one of the preceding claims, **characterised in that** the at least one web is covered with abrasive (25), in particular with abrasive grits, throughout its radial extension.

6. The tool crown (1) according to any one of the preceding claims, **characterised by** a plurality of webs (17, 18, 19) arranged in rotationally symmetric manner with respect to the cylinder axis (13) of the abrasive body (10) and connecting the central abrasive area (15) with the inner wall (20) of the hollow cylindrical abrasive body (10).

7. The tool crown (1) according to any one of the preceding claims, wherein the abrasive body (10) has a diameter of at least 5 millimeters, preferably the abrasive body (10) has a diameter between 5 and 60 millimetres.

8. The tool crown (1) according to any one of the preceding claims, **characterised in that** the surface area of the one or more web(s) (17, 18, 19) and of the central abrasive area (15) in total is smaller than the total area of the one or more opening(s) (27) interrupting the abrasive surface.

9. A method for producing a glass or glass ceramic element (30), wherein:
- a glass or glass ceramic element (30) is provided; and
- a recess (33) is grinded using a tool crown (1) according to any one of claims 1 to 8, wherein said tool crown (1) has a radius of at least 6 millimeters, and wherein the recess (33) extends rectilinearly into the glass or glass ceramic element (30) from the opening (36) at the surface (31) of the glass or glass ceramic element (30), by
- causing the tool crown (1) to rotate around its cylinder axis; and
- while being rotated, axially advancing the tool crown into the glass or glass ceramic element (30), incrementally or continuously, and thereby removing material of the glass or glass ceramic element (30) by means of the abrasive body (10) of the tool crown (1),
- until a recess (33) has been formed in the glass or glass ceramic element (30) in the form of a hole which is closed on one end thereof and has a flat bottom (331).

10. A glass or glass ceramic mirror support for a telescope, producible according to the method of claim 9, wherein the glass or glass ceramic element (30) comprises a plurality of ground-in recesses (33) extending next to each other in the form of holes that are closed on one end thereof and have an opening (36) at the surface (31) of the glass or glass ceramic element (30) and a flat bottom (331), and wherein the recesses (33) extend rectilinearly from the opening (36) to the flat bottom (331), and wherein the recesses (33) are delimited by a lateral wall (332) which has a curvature with a minimum radius of at least 6 millimeters, wherein the ratio of depth of the recesses (33) to the minimum radius thereof is greater than 10:1, and wherein a minimum distance between the walls (332) of two adjacent recesses (33) is not more than 15 mm, preferably not more than 10 millimeters.

11. The mirror support according to claim 10, wherein the lateral walls (332) of the recesses (33) have a mean roughness of Rₐ < 6 µm.

12. The mirror support according to claim 10 or 11, **characterised by** a uniform cross-sectional area along the longitudinal extension of the recesses (33).

## Revendications

1. Couronne d'outil (1) destinée à percer et à fraiser des évidements (3) dans du verre ou de la vitrocéramique, où la couronne d'outil (1) présente un corps abrasif (10) en forme de cylindre creux, qui se prolonge en une tige (7) de préférence creuse, où une surface abrasive centrale (15) est située sur la surface frontale (12) du corps abrasif (10) en forme de cylindre creux à l'emplacement de l'axe de cylindre (13) du corps abrasif (10), laquelle est reliée à la paroi intérieure (20) du corps abrasif (10) en forme de cylindre creux au moyen d'au moins un élément jointif (17, 18, 19), et où la surface frontale (12) du corps abrasif (10), l'élément jointif (17, 18, 19) avec la surface abrasive centrale (15) et au moins une partie de la paroi extérieure (22) du corps abrasif (10) sont garnis d'un abrasif (25), où l'au moins un élément jointif est garni en continu le long de son sens radial d'un abrasif (25), et où au moins une ouverture (27) menant à l'intérieur du corps abrasif (10) demeure entre l'au moins un élément jointif (17, 18, 19) et la paroi intérieure du corps abrasif (10).

2. Couronne d'outil (1) selon la revendication précédente, **caractérisée en ce que** la surface abrasive centrale (15) et l'au moins un élément jointif (17, 18, 19) se situent au même niveau que la surface frontale (12), de sorte que la surface frontale (12), l'au moins un élément jointif (17, 18, 19) et la surface abrasive centrale (15) forment une surface abrasive située dans un plan défini par la surface frontale (12) et traversée par l'au moins une ouverture (27).

3. Couronne d'outil (1) selon l'une quelconque des revendications précédentes, **caractérisée en ce que** l'abrasif (25) comporte des grains abrasifs, de préférence des grains abrasifs en diamant, lesquels sont intégrés dans une matrice.

4. Couronne d'outil (1) selon la revendication précédente, dans lequel les grains abrasifs sont insérés dans une matrice métallique par frittage.

5. Couronne d'outil (1) selon l'une quelconque des revendications précédentes, **caractérisée en ce que** l'au moins un élément jointif est garni en continu le long de son sens radial d'abrasifs (25), en particulier de grains abrasifs.

6. Couronne d'outil (1) selon l'une quelconque des revendications précédentes, **caractérisée par** plusieurs éléments jointifs (17, 18, 19) agencés à symétrie de rotation par rapport à l'axe de cylindre (13) du corps abrasif (10) et reliant la surface abrasive centrale (15) à la paroi intérieure (20) du corps abrasif (10) en forme de cylindre creux.

7. Couronne d'outil (1) selon l'une quelconque des revendications précédentes, dans lequel le diamètre du corps abrasif (10) atteint au moins 5 millimètres, de préférence, dans lequel le diamètre du corps abrasif (10) est compris entre 5 et 60 millimètres.

8. Couronne d'outil (1) selon l'une quelconque des revendications précédentes, **caractérisée en ce que** la surface de l'élément ou des éléments jointifs (17, 18, 19) et de la surface abrasive centrale (15) est, prise dans l'ensemble, inférieure à la surface totale des une ou plusieurs ouvertures (27) traversant la surface abrasive.

9. Procédé de fabrication d'un élément en verre ou en vitrocéramique (30), selon lequel
- un élément en verre ou en vitrocéramique est fourni et
- un évidement (33) est ménagé par meulage au moyen d'une couronne d'outil (1) selon l'une quelconque des revendications 1 à 8, où la couronne d'outil (1) présente un rayon d'au moins 6 millimètres, et l'évidement (33) s'étend en ligne droite en partant de l'ouverture (36) sur la surface (31) de l'élément en verre ou en vitrocéramique (30) à l'intérieur de l'élément en verre ou en vitrocéramique (30), par le fait que
- la couronne d'outil (1) est amenée en rotation autour de son axe de cylindre et
- pendant la rotation dans le sens axial, introduite sur certaines parties ou en continu dans l'élément en verre ou en vitrocéramique (30) et, ce faisant, le matériau de l'élément en verre ou en vitrocéramique (30) est enlevé au moyen du corps abrasif (10) de la couronne d'outil (1),
- jusqu'à ce qu'une cavité fermée unilatéralement et présentant une surface de fond plane (331) soit formée en tant qu'évidement (33) dans l'élément en verre ou en vitrocéramique (30).

10. Porte-miroir en verre ou en vitrocéramique pour un télescope, pouvant être fabriqué selon le procédé de la revendication 9, où l'élément en verre ou en vitrocéramique (30) comprend plusieurs évidements (33) ménagés par meulage, qui s'étendent les uns à côté des autres, en tant que cavités fermées unilatéralement pourvues d'une ouverture (36) sur la surface (31) de l'élément en verre ou en vitrocéramique (30) et d'une surface de fond plane (331), et les évidements (33) s'étendent en ligne droite de l'ouverture (36) à la surface de fond (331), et les évidements (33) sont délimités par une paroi latérale (332), qui présente une courbure pourvue d'un rayon minimal d'au moins 6 millimètres, où le rapport de la profondeur des évidements (33) sur le rayon minimal est supérieur à 10:1, et où l'écart minimal entre les parois (332) de deux évidements (33) voisins atteint au maximum 15 millimètres, de préférence au maximum 10 millimètres.

11. Porte-miroir selon la revendication 10, dans lequel les parois latérales (332) des évidements (33) présentent une rugosité moyenne Rₐ < 6 µm.

12. Porte-miroir selon la revendication 10 ou 11, **caractérisé par** une surface de section transversale invariable le long de la direction longitudinale des évidements (33).
